# EUROPÄISCHE PATENTANMELDUNG

(11) **EP 4 190 677 A1**
(43) Veröffentlichungstag der Anmeldung: **07.06.2023**
(21) Anmeldenummer: 22210883.9
(22) Anmeldetag: 01.12.2022
(51) Int. Cl.: B62J 43/13, B62J 43/28

(54) **FAHRRAD-BATTERIEEINRICHTUNG**

(30) Priorität: 01.12.2021 DE 202021106551 U
(71) Anmelder: Canyon Bicycles GmbH, 56073 Koblenz (DE)
(72) Erfinder: Ströer, Moritz, 56068 Koblenz (DE); Müller, Philipp, 56355 Nastätten (DE)
(74) Vertreter: dompatent von Kreisler Selting Werner - Partnerschaft von Patent- und Rechtsanwälten mbB

(57) **Zusammenfassung**

Eine Fahrrad-Batterieeinrichtung weist ein Fahrradrahmenrohr wie ein Unterrohr (14) auf. In Längsrichtung (24) des Fahrradrahmenrohrs (14) ist eine Batterie (26) durch eine Batterieöffnung (22) einsetzbar. Zwischen der Batterie (26) und einer Innenkontur (30, 32) des Fahrradrahmenrohrs (14) ist ein Justageelement (36) zur Vereinfachung der Justage angeordnet.

## Beschreibung

Die Erfindung betrifft eine Fahrrad-Batterieeinrichtung.

Bei E-Bikes ist es bekannt, die Batterie beispielsweise an einer Oberseite des Unterrohrs anzuordnen. Ferner ist es bekannt, die Batterie innerhalb des Unterrohrs anzuordnen, wobei ein derartiger Fahrradrahmen derart gestaltet ist, dass ein unteres Ende des Unterrohr unterhalb des Tretlagergehäuses endet, sodass die Batterie in eine an dem unteren Endes Unterrohrs vorgesehene Öffnung in Längsrichtung des Unterrohrs eingeschoben werden kann. Insbesondere aufgrund des Gewichts der Batterie ist die Montage durch Einschieben der Batterie in Längsrichtung des Unterrohrs schwierig, da beispielsweise ein Verkanten oder Verklemmen der Batterie beim Einschieben auftreten kann.

Aufgabe der Erfindung ist es, eine Fahrrad-Batterieeinrichtung zu schaffen, durch die die Montage der Batterie insbesondere durch Einschieben in Längsrichtung eines Fahrradrahmenrohrs vereinfacht ist.

Die Lösung der Aufgabe erfolgt durch eine Fahrrad-Batterieeinrichtung mit den Merkmalen des Anspruchs 1.

Die erfindungsgemäße Fahrrad-Batterieeinrichtung weist ein Fahrradrahmenrohr, insbesondere ein Unterrohr eines Fahrradrahmens auf. Ferner ist eine Batterie vorgesehen, die in Längsrichtung des Fahrradrahmenrohrs in dieses durch eine Batterieöffnung einsetzbar ist. Um das Einsetzen der Batterie zu vereinfachen und insbesondere eine zuverlässige Justage der Batterie innerhalb des Fahrradrahmenrohrs sicherzustellen, ist erfindungsgemäß ein Justageelement vorgehen, das zwischen der Batterie und dem Fahrradrahmenrohr angeordnet ist. Für eine zuverlässige Justage weist das Justageelement vorzugsweise eine Außenkontur auf, die zumindest teilweise einer Innenkontur des Fahrradrahmenrohrs entspricht. Beispielsweise weist die Außenkontur des Justageelements mindestens zwei Anlageflächen auf, die parallel zu korrespondierenden Innenflächen der Innenseite des Fahrradrahmenrohrs verlaufen. Über diese mindestens zwei Anlageflächen kann bereits eine gute Justage der Batterie relativ zum Fahrradrahmenrohr erfolgen. Bevorzugt ist es, mehr als zwei, insbesondere mindestens drei derartige Anlageflächen, die parallel zu korrespondierenden Innenflächen der Innenseite des Fahrradrahmenrohrs verlaufen, vorzusehen.

Insbesondere handelt es sich bei dem mindestens einen Justageelement um ein gesondertes von der Batterie unabhängiges Element. Dies hat insbesondere den Vorteil, dass dieselben Batterien in unterschiedlichen Fahrradrahmenrohren, d.h. Fahrradrahmenrohren mit unterschiedlichen Innenkonturen angeordnet werden können. Das mindestens eine Justageelement kann hierbei jeweils derart ausgebildet sein, dass es an die Innenkontur des Fahrradrahmenrohrs angepasst ist. Das Justageelement dient somit als eine Art Adapter zur Aufnahme derselben Batterien in unterschiedlichen Rahmenrohren. Dies ist insbesondere vorteilhaft, da es sich bei Batterien um Zukaufteile handelt und es insofern nicht erforderlich ist, die Batterie bzw. ein Batteriegehäuse für ein spezielles Fahrradrahmenrohr auszugestalten. Vielmehr können Standardbatterien, d.h. Batterien mit einem vorgegebenen Gehäuse bzw. einer festen Außenkontur aufgrund des Vorsehens mindestens eines erfindungsgemäßen Justageelements in unterschiedlichen Fahrradrahmenrohren angeordnet werden.

Die Außenkontur des Justageelements kann im Wesentlichen, insbesondere vollständig der Innenkontur des Fahrradrahmenrohrs entsprechen. Bezogen auf den Umfang der Außenkontur des Justageelements entspricht dieses somit mindestens 80%, insbesondere mindestens 90% der Innenkontur des Fahrradrahmenrohrs. Vorzugsweise umgibt das Justageelement nur einen Teil der Batterie. Bezogen auf den Umfang der Außenkontur des Justageelements entspricht diese hierbei vorzugsweise 30%-50% der Innenkontur des Fahrradrahmenrohrs. Besonders bevorzugt ist es, dass das Justageelement U-förmig ausgebildet ist und auf eine Seitenfläche der Batterie aufgesetzt ist, so dass die U-förmigen Ansätze insbesondere beidseitig in angrenzende Seitenflächen ragen.

Um eine zuverlässige Justage und eine einfache Montage durch Einschieben der Batterie in Längsrichtung zu gewährleisten, ist es besonders bevorzugt, dass zwischen den Anlageflächen der Außenkontur des Justageelements und den korrespondierenden Flächen der Innenkontur des Fahrradrahmenrohrs ein geringer Abstand vorgesehen ist. Insofern können Fertigungstoleranzen auf einfache Weise ausgeglichen werden, da es zur einfachen Montage und auch zur Justage nicht unbedingt erforderlich ist, dass beispielsweise einander gegenüberliege Anlageflächen an beiden einander gegenüberliegenden Innenflächen des Fahrradrahmenrohrs anliegen. Insbesondere ist der Abstand im Bereich von 0-3 mm und besonders bevorzugt 0-2 mm. Vorzugsweise ist der Abstand stets >0 mm, um beim Einführen der Batterie in Längsrichtung ein Verkanten zu vermeiden. Insbesondere ist ein Abstand von mindestens 0,5 mm bevorzugt. In besonders bevorzugter Ausführungsform beträgt der Abstand somit 0,5 - 3 mm, insbesondere 0,5 - 2 mm.

Die Innenfläche bzw. Innenkontur des Fahrradrahmenrohrs ist dahingehend zu verstehen, dass diese beispielsweise nicht nur durch die Innenseite des Fahrradrahmenrohrs selbst, sondern auch durch an der Innenseite angeordnete Elemente definiert ist. Beispielsweise kann an der Innenseite des Fahrradrahmenrohrs ein sich in Längsrichtung erstreckender Kabelkanal angeordnet sein. Die Innenseite bzw. Innenkontur des Fahrradrahmenrohrs ist somit in diesem Bereich durch die Innenseite des Kabelkanals ausgebildet.

Das Justageelement kann mit der Batterie verbunden, beispielsweise fest verbunden sein, indem das Justageelement mit der Außenseite der Batterie verklebt ist, über Rastelemente mit dieser verbunden ist oder dergleichen.

Vorzugsweise ist das Justageelement insbesondere auch zur einfachen Demontage mit der Batterie bzw. dem Batteriegehäuse verschraubt. Dies ist besonders bevorzugt, wenn das Justageelement kappen- oder U-förmig ausgebildet ist.

In bevorzugter Ausführungsform der Erfindung handelt es sich bei dem Justageelement um ein gesondertes Element, das weder mit der Innenseite des Fahrradrahmenrohrs noch mit der Außenseite der Batterie fest verbunden ist. Vorzugsweise ist das Justageelement mit der Batterie lösbar verschraubt. Hierdurch kann die Montage weiter vereinfacht werden.

Bevorzugt ist es hierbei, dass das Justageelement eine Innenkontur aufweist, die zumindest teilweise einer Außenkontur der Batterie bzw. des Batteriegehäuses entspricht. Hierdurch ist sichergestellt, dass die Außenseite der Batterie zumindest teilweise an der Innenseite des Justageelements anliegt bzw. parallel zu dieser mit einem geringen Abstand verläuft. Hierdurch ist es beispielsweise möglich, zuerst das Justageelement in das Fahrradrahmenrohr einzuschieben und anschließend die Batterie in das Justageelement einzuschieben.

Das Justageelement weist vorzugsweise mindestens zwei, insbesondere mindestens drei Anlageflächen auf, die parallel zu korrespondierenden Außenflächen der Batterie bzw. des Batteriegehäuses verlaufen. Bevorzugt ist es hierbei wiederum, dass die Innenkontur des Justageelements entsprechend der Außenkontur des Justageelements im Wesentlichen, insbesondere vollständig der Außenkontur der Batterie entspricht. In Umfangsrichtung entspricht die Innenkontur des Justageelements mindestens 80%, insbesondere mindestens 90% der Außenkontur der Batterie. Bei einer besonders bevorzugten Ausführungsform ist das Justageelement derart ausgebildet, dass es die Batterie nur teilweise umgibt. Insbesondere weist das Justageelement einen U-förmigen Querschnitt auf. In Umfangsrichtung entspricht in bevorzugter Ausführungsform die Innenkontur des Justageelements 30%-50% der Außenkontur der Batterie.

Des Weiteren ist es in dieser Ausführungsform, bei der keine feste Verbindung zwischen dem Justageelement und der Batterie besteht, bevorzugt, dass die Innenkontur des Justageelements zur Außenkontur der Batterie zumindest im Bereich der Anlageflächen bzw. korrespondierenden Flächen, einen Abstand von 0-3 mm, insbesondere 0-2 mm aufweist. Insbesondere ist der Abstand größer als 0 mm, insbesondere größer als 0,5 mm. Besonders bevorzugt sind somit Abstände von 0,5 - 3 mm, insbesondere 0,5 - 2 mm.

Das Justageelement kann eine Länge aufweist, die mindestens 50% der Länge der Batterie entspricht. Das Justageelement erstreckt sich somit zumindest über die Hälfte der Länge der Batterie. Bevorzugt erstreckt sich das Justageelement über mindestens 70% der Länge der Batterie. Auch ist es möglich, beispielsweise zwei oder mehr Justageelemente vorzusehen, die an unterschiedlichen Stellen, bezogen auf die Länge der Batterie angeordnet sind. Diese Elemente weisen insbesondere eine Länge von 10mm bis 30mm auf. Des Weiteren ist es möglich, dass sich die Außenkontur des Justageelements in Längsrichtung verändert, so dass die vorstehend beschriebenen bevorzugten Konturen beispielsweise nur in zwei Bereichen, insbesondere bezogen auf die Längsrichtung am Ende und am Anfang des Justageelements derart ausbildet sind. In dazwischenliegenden Bereichen könnte eine Verjüngung des Justageelements vorgesehen sein, um ein Einschieben des Justageelements in Längsrichtung in das Fahrradrahmenrohr zu erleichtern.

Nachfolgend wird die Erfindung anhand bevorzugten Ausführungsform unter Bezugnahme auf die anliegenden Zeichnungen näher erläutert.

Es zeigen:

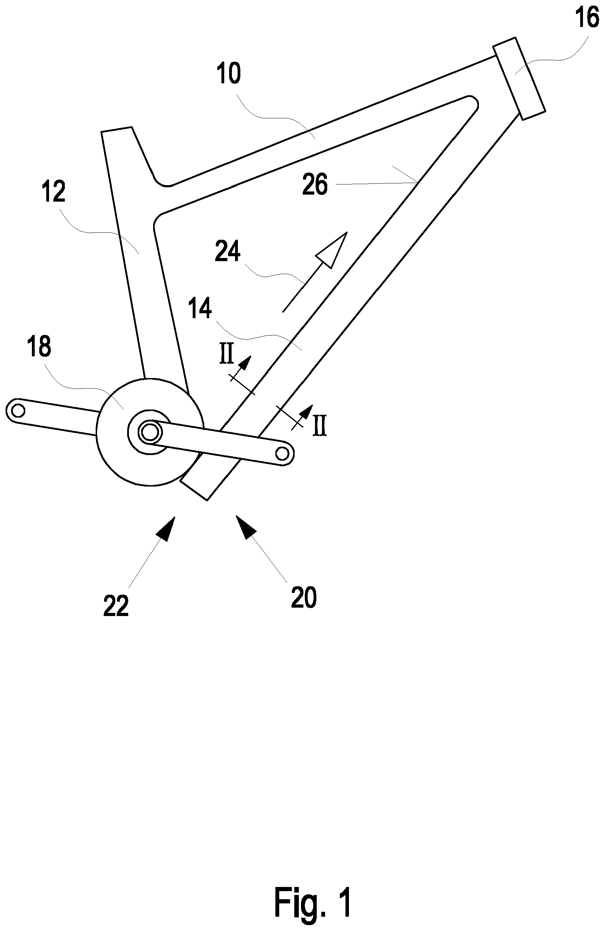

- Figur 1: eine stark vereinfachte, schematische Seitenansicht eines Fahr-radrahmens und
- Figur 2: einen schematischen Querschnitt durch das Unterrohr des Fahrradrahmens.

Ein Fahrradrahmen weist üblicherweise ein Oberrohr 10, ein mit Oberrohr 10 verbundenes Sattelrohr 12, ein Unterrohr 14 sowie ein mit dem Oberrohr 10 und dem Unterrohr 14 verbundenes Steuerrohr 16 auf. Ferner ist ein Tretlager- oder Motorgehäuse 18 vorgesehen, das zur Aufnahme eines Elektromotors sowie zur Aufnahme des Tretlagers dient. Es sind auch andere Rahmengeometrien bekannt. Im dargestellten Ausführungsbeispiel ist das Unterrohr 14 derart angeordnet, dass ein tretlagerseitiges Ende 20 des Unterrohrs 14 eine Batterieöffnung 22 aufweist. Die Batterieöffnung 22 ist somit bezogen auf eine Längsrichtung 24 des Unterrohrs 14 am unteren Ende des Unterrohrs angeordnet. In die Batterieöffnung 22 kann im dargestellten Ausführungsbeispiel von unten in Längsrichtung 24 eine Batterie in das Unterrohr 14 eingeschoben werden.

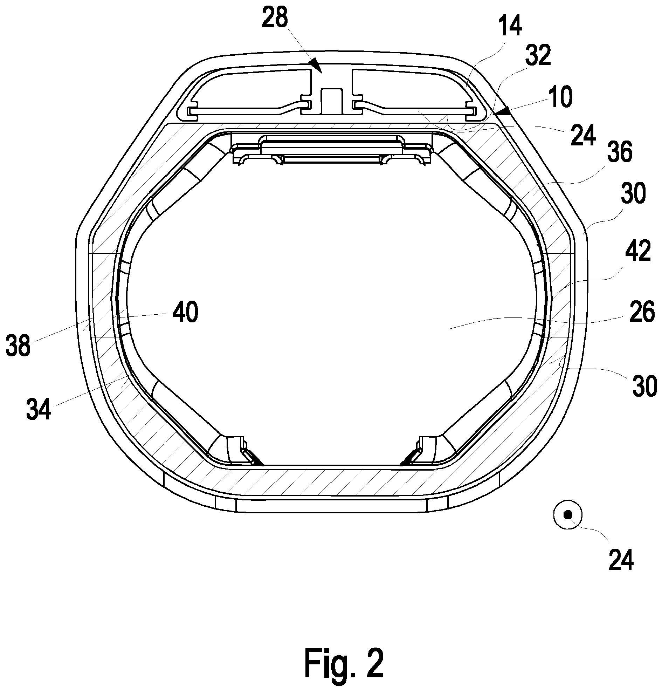

In dem in Figur 2 dargestellten Querschnitt durch das Unterrohr 14 ist innerhalb des Unterrohrs 14 in Längsrichtung 24 eine Batterie 26 angeordnet. Innerhalb des Unterrohrs 14 ist im dargestellten Ausführungsbeispiel ein Kabelkanal 28 angeordnet, der sich ebenfalls in Längsrichtung 24 erstreckt. Eine Innenkontur 30 des Unterrohrs 14 ist somit einerseits durch die Innenseite des Unterrohrs 14 sowie durch eine Innenseite 32 des Kabelkanals 28 ausgebildet.

Zwischen einer Außenkontur 34 ausbildenden Außenseite der Batterie 26 mit dem Gehäuse des entsprechenden Batteriegehäuses und der Innenkontur 30, 32 des Unterrohrs 14 ist erfindungsgemäß ein Justageelement 36 angeordnet. Das Justageelement 36 ist im dargestellten Ausführungsbeispiel ringförmig ausgebildet und umschließt die Batterie 26 vollständig. Im dargestellten Ausführungsbeispiel verläuft eine Außenkontur 38 des Justageelements 36 parallel zu der Innenkontur 30, 32 des Unterrohrs 14. Die beiden Konturen weisen einen geringen Abstand zueinander auf.

Im dargestellten Ausführungsbeispiel handelt es sich bei dem Justageelement 36 um ein gesondertes Element, das weder mit dem Unterrohr 14 noch mit der Batterie 26 fest verbunden ist. Vorzugsweise ist das Justageelement mit der Batterie verschraubt. Eine Innenkontur 40 des Justageelements 36 verläuft parallel zu der Außenkontur 34 der Batterie 26. Zwischen den Konturen 34, 40 ist wiederum ein geringer Abstand vorgesehen.

Alternativ zu der dargestellten Ausführungsform kann das Justageelement auch nur einen Teil der Batterie umgeben und ist insbesondere im Querschnitt U-förmig ausgebildet. Ein derartiges Element umschließt gegebenenfalls nur einen Drittel des Umfangs der Batterie. Insbesondere umschließt ein derartiges Element 30% - 50% des Umfangs der Batterie. In Längsrichtung können ein oder mehrere derartige Justageelemente vorgesehen sein, die gegebenenfalls nur eine Länge von 10 - 30 mm aufweisen.

## Patentansprüche

1. Fahrrad-Batterieeinrichtung mit
einem Fahrradrahmenrohr (14), insbesondere einem Unterrohr eines Fahrradrahmens,
einer in Längsrichtung (24) des Fahrradrahmenrohrs (14) in diesem durch eine Batterieöffnung (22) einsetzbaren Batterie (26) und
einem zwischen dem Fahrradrahmenrohr (14) und der Batterie (26) angeordneten Justageelement (36),
**dadurch gekennzeichnet, dass**
das Justageelement (36) eine Außenkontur (38) aufweist, die zumindest teilweise einer Innenkontur (30, 32) des Fahrradrahmenrohrs (14) entspricht.

2. Fahrrad-Batterieeinrichtung nach Anspruch 1, **dadurch gekennzeichnet, dass** die Außenkontur (38) mindestens zwei Anlageflächen, insbesondere mindestens drei Anlageflächen aufweist, die parallel zu korrespondierenden Innenflächen der Innenkontur (30) des Fahrradrahmenrohrs (14) verlaufen.

3. Fahrrad-Batterieeinrichtung nach Anspruch 1 oder 2, **dadurch gekennzeichnet, dass** die Außenkontur (38) des Justageelements (36) im Wesentlichen, insbesondere vollständig der Innenkontur (30, 32) des Fahrradrahmenrohrs (14) entspricht.

4. Fahrrad-Batterieeinrichtung nach einem der Ansprüche 1 bis 3, **dadurch gekennzeichnet, dass** das Justageelement (36) eine Innenkontur (40) aufweist, die zumindest teilweise einer Außenkontur (34) der Batterie (26) entspricht.

5. Fahrrad-Batterieeinrichtung nach Anspruch 4, **dadurch gekennzeichnet, dass** die Innenkontur (40) des Justageelements (36) mindestens zwei Anlageflächen, insbesondere mindestens drei Anlageflächen aufweist, die parallel zur korrespondierenden Außenkontur (34) der Batterie verlaufen.

6. Fahrrad-Batterieeinrichtung nach Anspruch 4 oder 5, **dadurch gekennzeichnet, dass** die Innenkontur (40) des Justageelements (36) im Wesentlichen, insbesondere vollständig der Außenkontur (34) der Batterie (26) entspricht.

7. Fahrrad-Batterieeinrichtung nach einem der Ansprüche 1 bis 6, **dadurch gekennzeichnet, dass** mehrere in Längsrichtung der Batterie (26) angeordnete Justageelemente (36) vorgesehen sind.

8. Fahrrad-Batterieeinrichtung nach einem der Ansprüche 1 bis 7, **dadurch gekennzeichnet, dass** das mindestens eine Justageelement eine Länge in Längsrichtung der Batterie (26) von 10 bis 30 mm aufweist.

9. Fahrrad-Batterieeinrichtung nach einem der Ansprüche 1 bis 6, **dadurch gekennzeichnet, dass** das Justageelement (36) eine Länge von mindestens 50%, insbesondere mindestens 70% der Länge der Batterie (26) aufweist.

10. Fahrrad-Batterieeinrichtung nach einem der Ansprüche 1 bis 9, **dadurch gekennzeichnet, dass** ein Abstand zwischen Anlageflächen der Außenkontur (38) des Justageelements (36) und korrespondierenden Flächen der Innenkontur (30, 32) des Fahrradrahmenrohrs (14) 0,5-3 mm, insbesondere 0,5-2 mm beträgt.

11. Fahrrad-Batterieeinrichtung nach einem der Ansprüche 1 bis 8, **dadurch gekennzeichnet, dass** ein Abstand zwischen Anlageflächen der Innenkontur (40) des Justageelements (36) und korrespondierenden Flächen der Außenkontur (38) der Batterie (26) 0,5-3 mm, insbesondere 0,5-2 mm beträgt.
